# EUROPÄISCHE PATENTANMELDUNG

(11) **EP 1 008 286 A1**
(43) Veröffentlichungstag der Anmeldung: **14.06.2000**
(21) Anmeldenummer: 99121085.7
(22) Anmeldetag: 22.10.1999
(51) Int. Cl.: A01B 73/04

(54) **Werkzeugträger**

(30) Priorität: 10.12.1998 DE 19856907
(71) Anmelder: Amazonen-Werke H. Dreyer GmbH & Co. KG, 49205 Hasbergen (DE)
(72) Erfinder: Wiemeyer, Benno, Dipl.-Ing., 49504 Lotte-Halen (DE)

(57) **Zusammenfassung**

Werkzeugträger für Bodenbearbeitungs-, Bodenbehandlungs- und/oder Sämaschinen mit einem Rahmen (1) mit einer Gesamtarbeitsbreite von mehr als 6 Metern, die für die Straßenfahrt auf eine Breite bis max. 3 Meter und eine Höhe bis ca. 4 Meter veränderbar ist, wobei der Rahmen (1) an einem mittleren Kuppelrahmen (3) mittels Gelenke, deren Gelenkachsen etwa in Fahrtrichtung weisen, angeordnet ist. Der Rahmen (1) besteht aus zwei an dem Kuppelrahmen (3) schwenkbar befestigten und aus einem Innenrahmen (6) und einem Außenrahmen (7) bestehenden Seitenrahmen (8), wobei die Seitenrahmen (8) jeweils im Abstand von ihren inneren Enden an dem Kuppelrahmen (3) angelenkt sind. Die Werkzeuge der beiden Innenrahmen (6) weisen im hochgeschwenkten, vertikalen Zustand (Straßenfahrt) ein Außenmaß von max. 3 Meter zueinander auf und die Innenrahmen (6) weisen am äußeren Ende jeweils eine Gelenkstelle zur Aufnahme des Außenrahmens (7) auf, der gegenüber den Innenrahmen (6) um 180 Grad in die Transportposition auf den zugeordneten Innenrahmen (6) klappbar ist.

## Beschreibung

Die Erfindung betrifft einen Werkzeugträger gemäß des Oberbegriffes des Patentanspruches 1.

Derartige Werkzeugträger sind beispielsweise in der DE-197 16 801 A1 beschrieben. Dieser Werkzeugträger besteht aus insgesamt fünf aus einer Arbeitsstellung in eine Transportstellung einklappbaren Teilen, und zwar aus einem Mittelträger, zwei sich jeweils seitlich des Mittelträgers anschließenden Verlängerungsträger und sich an den Verlängerungsträger anschließenden Klappträgern, die untereinander durch Schwenkgelenke miteinander verbunden sind. Da die äußeren Teile an dem Mittelträger angeordnet sind. muß der Mittelträger, an dem ebenfalls Arbeitswerkzeuge befestigt sind, sehr stabil ausgebildet werden. Insbesondere, wenn der Werkzeugträger im Rahmen eines Baukastensystems eingesetzt werden soll, erweist sich ein derartiger Mittelträger für die Einfaltmöglichkeit als nachteilig.

Der Erfindung liegt die Aufgabe zugrunde, eine vorteilhafte Faltmöglichkeit für Werkzeugträger großer Arbeitsbreiten vorzuschlagen.

Diese Aufgabe wird durch die Merkmale des Patentanspruches 1 gelöst. Infolge dieser Maßnahmen werden an einem Kuppelrahmen, der je nach Arbeitsbreite entsprechend stabil ausgelegt werden kann, die einklappbaren Innen- und Außenrahmen des Seitenrahmens angeordnet.

Als besonders vorteilhaft hat sich herausgestellt, daß der Rahmen in der Mitte zur Schaffung der beiden Seitenrahmen geteilt ist.

Eine vorteilhafte Bauhöhe im eingefalteten Zustand ergibt sich bei einer Gesamtarbeitsbreite von 7-9 Metern, wenn die Innenteile jeweils eine Baubreite von ca. 3 Metern aufweisen, während bei einer Gesamtarbeitsbreite von mehr als 9 Metern die Innenteile jeweils eine Baubreite von ca. 3,75 Metern aufweisen.

Weitere Einzelheiten der Erfindung sind der Beispielsbeschreibung und den Zeichnungen zu entnehmen. Hierbei zeigen
- Fig. 1: den Werkzeugträger für 8 m Arbeitsbreite in Arbeitsstellung und in Prinzipdarstellung,
- Fig.2: den Werkzeugträger gemäß Fig. 1, jedoch in Transportstellung eingeklappt,
- Fig.3: einen weiteren Werkzeugträger mit 9 m Arbeitsbreite in Arbeitsstellung und in Prinzipdarstellung,
- Fig.4: den Werkzeugträger gemäß Fig.3 in Transportstellung,
- Fig.5: den Werkzeugträger für 12 m Arbeitsbreite in Arbeitsstellung und in Prinzipdarstellung und
- Fig.6: den Werkzeugträger gemäß Fig.5 in Transportstellung.

Der Werkzeugträger weist einen Rahmen 1 mit einer Gesamtarbeitsbreite G von mehr als 6 m auf. Der Werkzeugträger ist für Bodenbearbeitungs-, Bodenbehandlungs- und/oder Sämaschinen vorgesehen. An dem Rahmen 1 des Werkzeugträgers sind Arbeitswerkzeuge 2, wie beispielsweise Bodenwalzen, Walzenräder, Säschare etc. anzuordnen. Der Rahmen 2 ist an einem Mittel-Kuppelrahmen 3 mittels Gelenke 4, deren Gelenkachsen 5 etwa in Fahrtrichtung weisen, angeordnet. Der Rahmen 1 besteht aus zwei an dem Kuppelrahmen 3 mittels der Gelenke 4 schwenkbar befestigten und aus einem Innenrahmen 6 und einem Außenrahmen 7 bestehenden Seitenrahmen 8 Die Seitenrahmen 8 sind jeweils im Abstand von ihren inneren Enden 9 an dem Kuppelrahmen 3 mittels der Gelenke 4 angelenkt, wobei die Werkzeuge 2 der beiden Innenrahmen 6 im hochgeschwenkten, vertikalen Zustand (Straßenfahrt), wie Fig. 2 zeigt, ein Außenmaß A von max. 3 m zueinander aufweisen. Die Innenrahmen 6 weisen jeweils in ihrem äußeren Ende eine Gelenkstelle 10 zur Aufnahme des Außenrahmens 7 auf, der gegenüber dem Innenteil um 180 Grad in eine Transportposition auf den zugeordneten Innenrahmen 6 klappbar ist, wie Fig.2 zeigt. Der Rahmen 1 ist in der Mitte zur Schaffung der beiden Seitenrahmen 8 geteilt. Bei einer Gesamtarbeitsbreite G von 7-9 Metern weisen die Innenrahmen 6 jeweils eine Baubreite B von etwa 3 m auf.

Zwischen dem Kuppelrahmen 3 und den nach innen über die Gelenke überstehenden Enden der Innenrahmen 6, sind die als Hydraulikzylinder 11 ausgebildeten Betätigungselemente zum Schwenken der Seitenrahmen 8 in die aufrechte Transportposition angeordnet. Bevor die Innenrahmen 6 senkrecht gestellt werden bzw. ihre senkrechte Position erreichen, werden die Außenrahmen 7 über zwischen dem Innen- und dem Außenrahmen 7 angeordneten, jedoch nicht dargestellten Betätigungselementen, die beispielsweise als Hydraulikzylinder ausgebildet sein können, um 180 Grad auf die Innenrahmen 6 geschwenkt, wie Fig.2 zeigt.

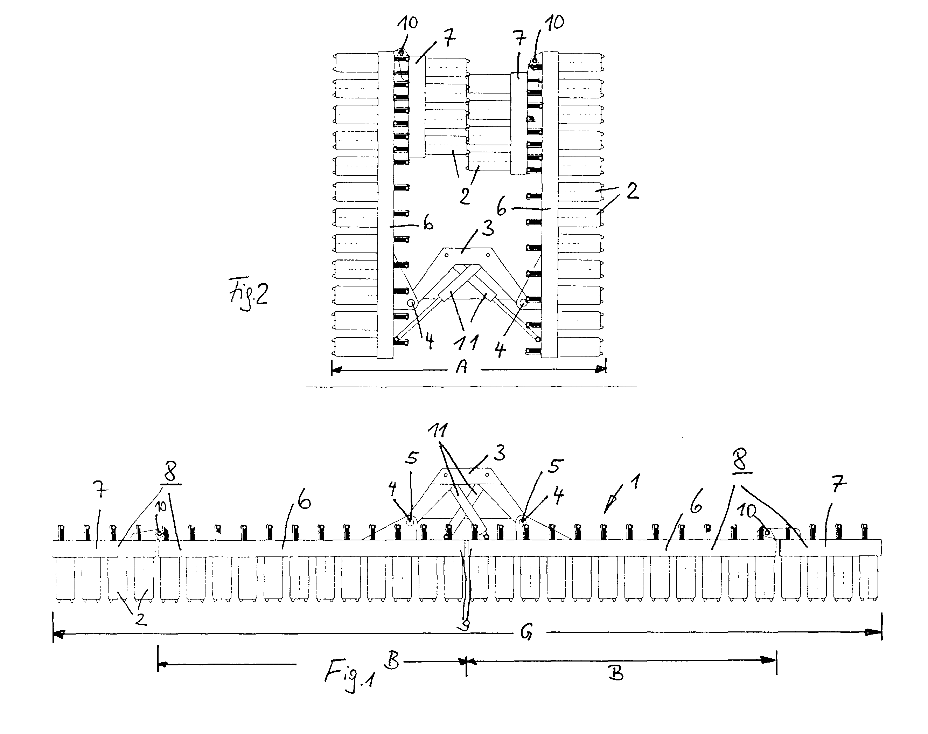

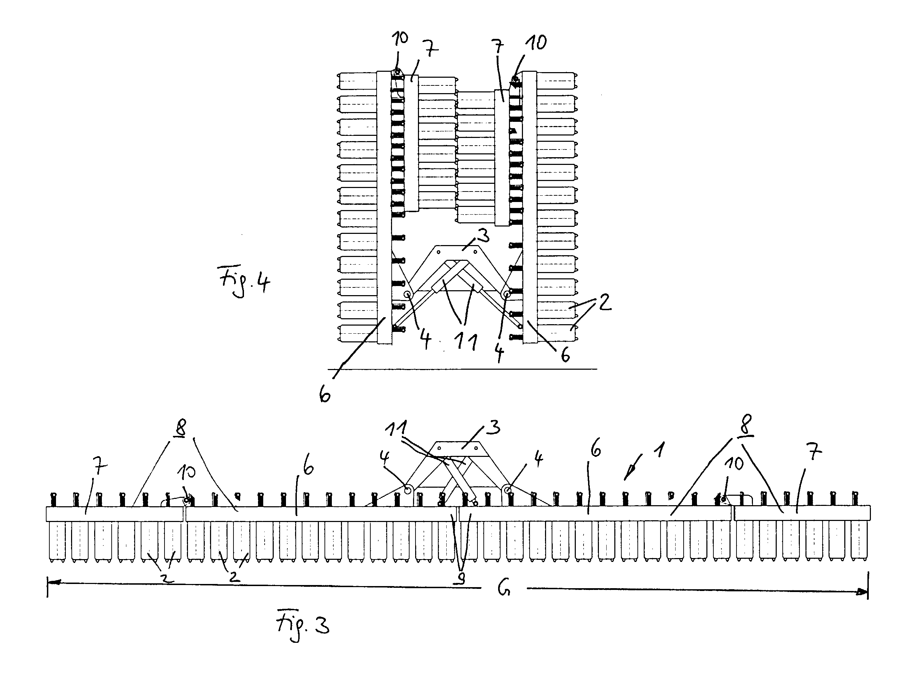

Das Ausführungsbeispiel nach den Fig.3 und 4 unterscheidet sich von dem Ausführungsbeispiel gemäß Fig.1 und 2 dadurch, daß die Gesamtarbeitsbreite G dieses Werkzeugträgers 9 m beträgt.

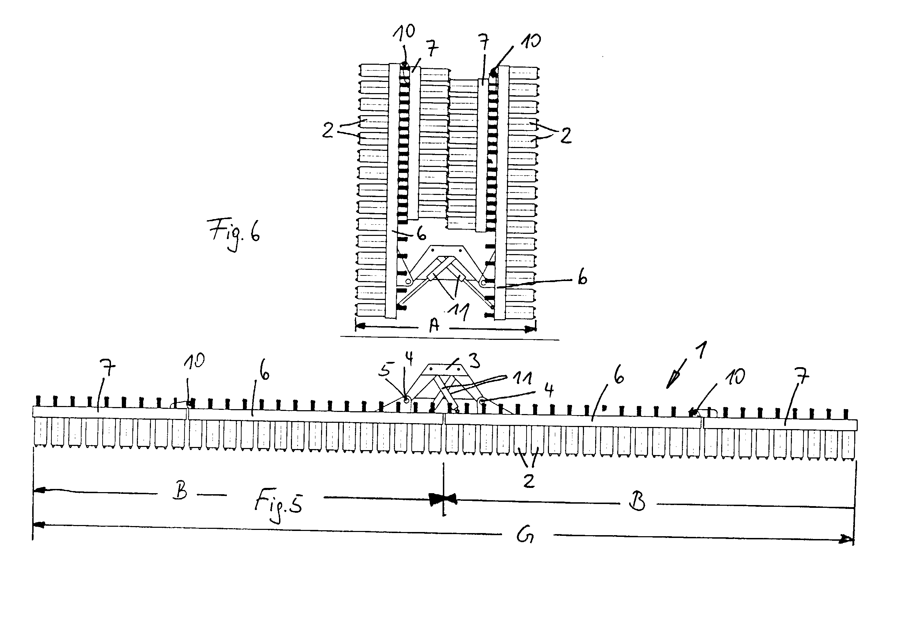

Das Ausführungsbeispiel gemäß den Fig.5 und 6 unterscheidet sich von dem Ausführungsbeispiel gemäß Fig.1 dadurch, daß die Gesamtarbeitsbreite G 12 m beträgt und die Innenrahmen 6 eine Breite B von 3,75 m aufweisen. Die Funktionsweise des Ein- und Ausklappens ist gleich wie bei dem Ausführungsbeispiel gemäß Fig.1 und 2.

## Patentansprüche

1. Werkzeugträger für Bodenbearbeitungs-, Bodenbehandlungs- und/oder Sämaschinen mit einem Rahmen mit einer Gesamtarbeitsbreite von mehr als 6 Metern, die für die Straßenfahrt auf eine Breite bis max. 3 Meter und eine Höhe bis ca. 4 Meter veränderbar ist, wobei der Rahmen (1) an einem mittleren Kuppelrahmen (3) mittels Gelenke, deren Gelenkachsen etwa in Fahrtrichtung weisen, angeordnet ist, wobei der Rahmen aus zwei an dem Kuppelrahmen (3) schwenkbar befestigten und aus einem Innenrahmen (6) und einem Außenrahmen (7) bestehenden Seitenrahmen (8) besteht, wobei die Seitenrahmen jeweils im Abstand von ihren inneren Enden an dem Kuppelrahmen angelenkt sind, wobei die Werkzeuge (2) der beiden Innenrahmen (6) im hochgeschwenkten, vertikalen Zustand (Straßenfahrt) ein Außenmaß (A) von max. 3 Meter zueinander aufweisen, und wobei die Innenrahmen (6) am äußeren Ende jeweils eine Gelenkstelle zur Aufnahme des Außenrahmens (7) aufweisen, der gegenüber den Innenrahmen (6) um 180 Grad in die Transportposition auf den zugeordneten Innenrahmen (6) klappbar ist.

2. Werkzeugträger nach Anspruch 1, dadurch gekennzeichnet, daß der Rahmen (1) in der Mitte zur Schaffung der beiden Seitenrahmen (6) geteilt ist.

3. Werkzeugträger nach einem oder mehreren der vorstehenden Ansprüche, dadurch gekennzeichnet, daß bei einer Gesamtarbeitsbreite (G) von 7-9 Metern die Innenteile jeweils eine Baubreite (B) von ca. 3 Meter aufweisen.

4. Werkzeugträger nach einem oder mehreren der Ansprüche 1 und 2, dadurch gekennzeichnet, daß bei einer Gesamtarbeitsbreite (G) von mehr als 9 Metern die Innenteile jeweils eine Baubreite (B) von ca. 3,75 Metern aufweisen.
